Europäisches Patentamt

European Patent Office

Office européen des brevets

(19)

(11) **EP 0 629 581 B1**

(12) **EUROPÄISCHE PATENTSCHRIFT**

(45) Veröffentlichungstag und Bekanntmachung des Hinweises auf die Patenterteilung:
09.04.1997 **Patentblatt 1997/15**

(51) Int. Cl.$^6$: **C01G 23/053**

(21) Anmeldenummer: **94201460.6**

(22) Anmeldetag: **24.05.1994**

(54) **Verfahren zur Gewinnung von TiO2 aus dem Rückstand der TiO2-Herstellung**

Process for the production of TIO2 from TIO2 process residues

Procédé d'obtention de TIO2 à partir des résidus de la fabrication de TIO2

(84) Benannte Vertragsstaaten:
**DE ES FR GB IT NL**

(30) Priorität: **01.06.1993 DE 4318126**

(43) Veröffentlichungstag der Anmeldung:
**21.12.1994 Patentblatt 1994/51**

(73) Patentinhaber: **METALLGESELLSCHAFT AG**
**60323 Frankfurt am Main (DE)**

(72) Erfinder: **Amirzadeh-Asl, Djamschid, Dr.**
**D-47445 Moers (DE)**

(56) Entgegenhaltungen:
**EP-A- 0 031 064          EP-A- 0 475 104**
**US-A- 2 850 357**

- **DATABASE WPI Week 7719, Derwent Publications Ltd., London, GB; AN 77-33702Y & JP-A-52 041 197 (TONG I) 30. März 1977**

**Beschreibung**

Der Gegenstand der vorliegenden Erfindung ist ein Verfahren zur Gewinnung von $TiO_2$ aus dem Rückstand der $TiO_2$-Herstellung, bei der Ilmenit und/oder Schlacke mit Schwefelsäure aufgeschlossen wird und ein Rückstand mit $TiO_2$-Gehalten von 20 bis 60 %, bezogen auf den $TiO_2$- Feststoffgehalt, zurückbleibt. Die vorliegende Erfindung bezieht sich ferner auf ein Verfahren zur Herstellung von Ilmenit aus dem Rückstand der $TiO_2$-Herstellung sowie aus $TiO_2$-haltigem Rückstand der Chemischen Industrie.

Bei der Herstellung von Titandioxid, insbesondere Titandioxidpigmenten, nach dem Sulfatverfahren werden titanhaltige Rohstoffe, wie Ilmenit und Schlacke oder ein Gemisch aus Ilmenit und Schlacke mit Schwefelsäure gelaugt, wobei Titan in Form von Titanylsulfat ausgelaugt wird. Der unlösliche Rückstand wird über einen Eindicker und Drehfilter abgetrennt. Die titanhaltigen Rohstoffe sind nur bis maximal 95 % aufschließbar. In dem restlichen Aufschlußrückstand verbleiben 20 bis 60 % $TiO_2$-Gehalt, bezogen auf den Feststoffgehalt.

Aus der DE-OS 40 27 105 ist ein Verfahren zur Aufarbeitung des Rückstandes aus der $TiO_2$-Produktion nach dem Sulfatverfahren bekannt, bei dem Ilmenit und/oder Schlacke mit Schwefelsäure aufgeschlossen wird und nach der Aufarbeitung ein Feststoff mit Titandioxidgehalten von 20 bis 60 %, bezogen auf den Feststoffgehalt, als Rückstand verbleibt. Der Aufschlußrückstand wird mit Schwefelsäure in einem Gewichtsverhältnis von $TiO_2$ zu $H_2SO_4$ von 1 : 1 bis 1 : 3,5 gemischt. Die Temperatur wird durch Zufuhr von Energie auf Werte von 120 bis 300°C, vorzugsweise von 140 bis 250°C erhöht. Bei dieser Temperatur verweilt das Gemisch 15 Minuten bis 20 Stunden, vorzugsweise 30 Minuten bis 8 Stunden. Der daraus erhaltene Aufschlußkuchen wird weiter aufgearbeitet und der Hydrolyse zugeführt. Der Nachteil des Verfahrens ist, daß bei der Verwendung von Schwefelsäure in einem Gewichtsverhältnis von $TiO_2$ zu $H_2SO_4$ von 1 : 2 nach einer Verweilzeit von 3,5 Stunden bei 250°C der Aufschlußgrad nur 65 % $TiO_2$, bezogen auf den $TiO_2$-Feststoffanteil, beträgt. Selbst nach 4- bis 6-stündigem Reifen bei 210°C und Eindampfen bis zur Trockne des Gemisches liegt der Aufschlußgrad nur bei 79 bis 84 %, bezogen auf den $TiO_2$-Gehalt im eingesetzten Feststoff. Das nicht aufgeschlossene $TiO_2$ muß daher deponiert werden. Ein solches Verfahren ist wegen des hohen Energieverbrauchs nicht wirtschaftlich. Ein weiterer Nachteil dieses herkömmlichen Verfahrens ist, daß die Anlagen beim Nachaufschließen von $TiO_2$-Aufschlußrückständen höhere Korrosions- und Abrasionsschäden nach kurzer Betriebsdauer aufweisen als beim Aufschließen von Ilmenit.

Aufgabe der vorliegenden Erfindung ist es, ein Verfahren zur Gewinnung von $TiO_2$ aus dem Rückstand der $TiO_2$-Herstellung bereitzustellen, das umweltfreundlich und wirtschaftlich ist, hohe Ausbeuten an $TiO_2$ ergibt sowie einen geringen Energieverbrauch hat.

Die Aufgabe wird gelöst dadurch, daß

a) der Rückstand mit einem oder mehreren Bestandteilen, ausgewählt aus Eisen, Eisenoxid, eisen- oder eisenoxidhaltigen Rückständen gemischt wird;

b) das Gemisch thermisch behandelt wird;

c) das thermisch behandelte Produkt mit Schwefelsäure in einem Gewichtsverhältnis von $TiO_2$ zu $H_2SO_4$ von 1 : 1 bis 1 : 6 gemischt wird;

d) das Gemisch auf eine Temperatur von 130 bis 280°C erwärmt wird,

e) das Gemisch 15 Min. bis 22 Stunden bei einer Temperatur von 130 bis 280°C gehalten wird;

f) der daraus erhaltene Aufschlußkuchen aufgearbeitet und der Hydrolyse zugeführt wird.

In den Verfahrensstufen (a) und (b) werden erfindungsgemäß Produkte erhalten, die unter den Bedingungen der Verfahrensstufen (c) bis (e) aufschließbar sind, wobei überraschenderweise die Ausbeuten an $TiO_2$ >80 % sind, bezogen auf den $TiO_2$-Gehalt im eingesetzten Aufschlußrückstand.

Bei den eisenoxidhaltigen Rückständen handelt es sich überwiegend um oxidische Rückstände (FeO, $Fe_2O_3$ oder $Fe_3O_4$), die in Form von Stäuben, Filterschlämmen oder Filterkuchen anfallen. Ein typisches Produkt ist Spaltabbrand ($Fe_2O_3$, $Fe_3O_4$). Spaltabbrand fällt bei der Herstellung von Schwefelsäure durch die Spaltung von Schwefelkies oder Eisensulfat als Rückstand an. Der Eisengehalt in den Spaltabbränden kann zwischen 30 bis 60 Gew.-% variieren. Eisenhaltige Rückstände sind z. B. $Fe(OH)_3$ oder $FeSO_4$. $FeSO_4$ fällt als Reststoff bei der $TiO_2$-Herstellung als sog. Filtersalz an.

Ein anderer eisen- und eisenoxidhaltiger Rückstand ist Walzzunder. Beim Walzzunder handelt es sich um die Oxidationsschichten, die beim Walzen und Schmieden von Stahl sowie beim Ziehen von Draht anfallen. Im Walzwerk wird der Walzzunder z. B. durch einen Wasserstrahl von der gewalzten Metalloberfläche während des Walzens abgefegt. Schließlich fallen eisen- und eisenoxidhaltige Rückstände in allen Bereichen der Eisenherstellung an sowie bei der Pro-

2

duktion von Eisenoxid zur Herstellung von Farbpigmenten.

Bei der thermischen Behandlung eines Gemisches gemäß Verfahrensstufe (b) wird ein Eisentitanat ($FeTiO_3$) erhalten, das überraschenderweise zu mehr als 80 % die Ilmenitstruktur aufweist. Aufschlußrückstände enthalten dagegen $TiO_2$ in der Rutil- und Anatasstruktur.

Produkte, die gemäß den Verfahrensstufen (c) bis (e) mit hohen Ausbeuten an $TiO_2$ aufgeschlossen werden können, werden auch in Abwandlung der Verfahrensstufen (a) und (b) durch Umsetzen des Rückstandes aus der $TiO_2$-Herstellung mit Alkali- oder Erdalkaliverbindungen, wie z. B. Natriumcarbonat oder Magnesiumoxid, erhalten.

Eine Ausgestaltung der Erfindung ist, daß der Rückstand mit einem oder mehreren Bestandteilen, ausgewählt aus Eisen, Eisenoxid, eisen- oder eisenoxidhaltigen Rückständen und mindestens einem Bestandteil, ausgewählt aus Kohle und kohlehaltigen Rückständen gemäß Verfahrensstufe (a) gemischt wird.

Liegt das Eisen in dem Gemisch überwiegend in der Oxidationsstufe +3 vor, wird die Bildung von $FeTiO_3$ durch Kohle oder kohlehaltige Rückstände, die als Reduktionsmittel dienen, begünstigt.

Reaktionsgleichung 1 stellt die Bildung von $FeTiO_3$ dar. Die Reaktionsgleichung 2 stellt die Bildung von $FeTiO_3$ aus Eisenoxiden mit der Oxidationsstufe +3 unter Zusatz von Kohlenstoff dar.

$$TiO_2 + FeO \rightarrow FeTiO_3 \tag{1}$$

$$2TiO_2 + Fe_2O_3 + C \rightarrow 2FeTiO_3 + CO \tag{2}$$

Der Rückstand aus der $TiO_2$-Herstellung kann erfindungsgemäß mit $FeSO_4$ und C als Reduktionsmittel zu $FeTiO_3$ umgesetzt werden. Reaktionsgleichung 3 stellt diese Umsetzung dar.

$$FeSO_4 + TiO_2 + C \rightarrow FeTiO_3 + SO_2 + CO \tag{3}.$$

Das entstehende $SO_2$ wird vorteilhafterweise in der $H_2SO_4$-Herstellung weiterverwendet.

Der besondere Vorteil des erfindungsgemäßen Verfahrens ist, daß sowohl der $TiO_2$-haltige Rückstand aus der $TiO_2$-Herstellung wie der eisen- oder eisenoxidhaltige Rückstand aus der $TiO_2$-Herstellung, wie z. B. Eisenoxide und $FeSO_4$ verwendet werden, um durch Mischen des $TiO_2$-haltigen Rückstandes mit dem eisen- oder eisenoxidhaltigen Rückstand aus der $TiO_2$-Herstellung und der thermischen Behandlung des Gemisches erfindungsgemäß Produkte zu erhalten, die problemlos aufgeschlossen werden können, wobei mehr als 80 % des im eingesetzten Aufschlußrückstand vorhandenen $TiO_2$ zurückgewonnen wird.

Eine Ausgestaltung der Erfindung ist, daß das Gemisch in Abwandlung der Verfahrensstufe (b) gesintert wird und das Sintergut anschließend gemahlen wird. Es wurde überraschenderweise festgestellt, daß aus dem erfindungsgemäßen Gemisch besonders leicht ein Produkt gebildet wird, das zu 80 % die Ilmenit-Struktur aufweist, wenn das Gemisch gesintert wird. Um das Sinterprodukt erfindungsgemäß weiterverarbeiten zu können, muß es gemahlen werden.

Eine Ausgestaltung der Erfindung ist, daß in der Verfahrensstufe (c) das Produkt mit Schwefelsäure in einem Gewichtsverhältnis von $TiO_2$ zu $H_2SO_4$ von 1 : 1 bis 1 : 5 gemischt wird. Es konnte überraschenderweise festgestellt werden, daß der Aufschluß mit Schwefelsäure in diesem Gewichtsverhältnis zu besonders guten Ausbeuten an $TiO_2$ führt.

Eine bevorzugte Ausgestaltung der Erfindung ist, daß in der Verfahrensstufe (c) das Produkt mit Schwefelsäure in einem Gewichtsverhältnis von $TiO_2$ zu $H_2SO_4$ von 1 : 0,5 bis 1 : 2,5 gemischt wird und dem Gemisch anschließend Oleum in einem Gewichtsverhältnis von $TiO_2$ zu $H_2SO_4$ von 1 : 0,5 bis 1 : 3,5 zugesetzt wird. Es hat sich als besonders vorteilhaft erwiesen, das Produkt zunächst mit Schwefelsäure zu mischen und anschließend Oleum dem Gemisch zuzusetzen und das Gemisch weiter zu rühren.

Eine Ausgestaltung der Erfindung ist, daß in der Verfahrensstufe (d) das Gemisch auf eine Temperatur von 130° bis 280°C erwärmt und in der Verfahrensstufe (e) das Gemisch 15 Min. bis 6 Stunden bei einer Temperatur von 130° bis 280°C gehalten wird. Es hat sich als vorteilhaft erwiesen, den Aufschluß in diesem Zeitraum durchzuführen.

Eine Ausgestaltung der Erfindung ist, daß in der Verfahrensstufe (d) das Gemisch auf eine Temperatur von 130° bis 230° erwärmt und in der Verfahrensstufe (e) das Gemissch 15 Min. bia 6 Stunden bei einer Temperatur von 130° bis 230°C gehalten wird. Es hat sich als vorteilhaft und wirtschaftlich erwiesen, den Aufschluß innerhalb dieses Zeitraumes in diesem Temperaturbereich durchzuführen. Diese Variante führt zu Ausbeuten an $TiO_2$ mit über 80 %, bezogen auf das $TiO_2$ im Aufschlußrückstand.

Eine weitere bevorzugte Ausgestaltung der Erfindung besteht darin, daß das Gemisch zur thermischen Behandlung gemäß der Verfahrensstufe (b) in einen Drehrohrofen, eine stationäre oder zirkulierende Wirbelschicht oder eine Sintervorrichtung eingebracht wird. Bei der Sintervorrichtung handelt es sich um eine Vorrichtung zum kontinuierlichen oder diskontinuierlichen Sintern, die eine vorteilhafte thermische Behandlung des Gemisches ermöglicht.

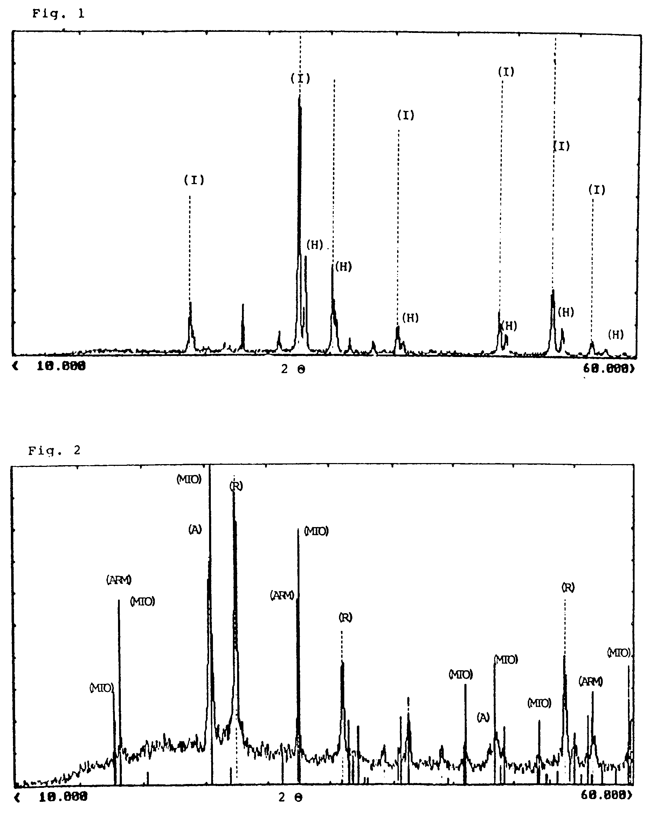

Die Erfindung wird anhand der Beispiele und der Figuren 1 bis 5 erläutert.

Beispiele

Beispiel 1

51,3 kg $TiO_2$-Aufschlußrückstand mit einem Feststoffgehalt von 70 Gew.-%, einem $TiO_2$-Gehalt von 50 Gew.-% und Fe-Gehalt von 3,3 Gew.-%, bezogen auf den Feststoffgehalt, wurden mit 13 kg Walzzunder mit einem Feststoffgehalt von 81 Gew.-%, Fe-Gehalt von 48 Gew.-%, bezogen auf den Feststoffgehalt sowie 7 kg Kohle in einem Mischer homogenisiert. Das homogene Gemisch wurde auf eine Pelletiervorrichtung gegeben, wobei Pellets mit einem mittleren Durchmesser von 1,0 cm erhalten wurden. Die Pellets wurden anschließend auf einer Sinterpfanne bei einer Temperatur von 1100 bis 1300°C 50 Min. gesintert. Das Sinterprodukt wurde dann zerkleinert und anschließend in einer Kugelmühle gemahlen bis das Material eine Feinheit von 95 % < 45 μm aufwies. Das Sinterprodukt wies einen $TiO_2$-Gehalt von 32,9 Gew.-% auf. In einem Becherglas wurden 104 g 81,4 Gew.-% $H_2SO_4$ enthaltende Schwefelsäure auf 100°C erwärmt. Anschließend wurden unter Rühren 100 g des gemahlenen Sinterprodukts zugesetzt. Nach 1 Minute wies das Gemisch eine Temperatur von 80°C auf. Dann wurden 78,5 g Oleum (104,5 %) unter Rühren hinzugesetzt. Das verwendete Oleum hatte einen $SO_3$-Gehalt von 25 bis 27 %. Das $H_2SO_4$-/Feststoff-Gewichts-Verhältnis lag im Aufschluß bei 1,66 : 1, das Gewichtsverhältnis von $H_2SO_4$ zu $TiO_2$ betrug 5 : 1. Innerhalb von 13 Minuten stieg die Temperatur auf 180°C an. Der Aufschluß wurde anschließend 2 Stunden bei einer Temperatur von 190°C gehalten. Danach wurde der Aufschluß mit 110 ml 80 Gew.-% $H_2SO_4$ enthaltender Schwefelsäure und 200 ml $H_2O$ bei einer Temperatur von 60°C unter Rühren versetzt, wobei die teilweise Lösung des Feststoffes eintrat. Während des Lösevorgangs wurden 5,5 g Eisenpulver hinzugesetzt. Die Lösungsdauer betrug 2,5 Stunden. Danach wurde die Lösung vom Rückstand abgetrennt. Die Ausbeute an herausgelöstem $TiO_2$ lag bei 93,1 %, bezogen auf den $TiO_2$-Gehalt im eingesetzten Aufschlußrückstand. Die Menge an zurückgebliebenem unlöslichen Rückstand lag bei 36 g mit einem $TiO_2$-Gehalt von 6,25 %, bezogen auf den $TiO_2$-Gehalt des eingesetzten Aufschlußrückstandes.

Beispiel 2

Das gemahlene Sinterprodukt gemäß Beispiel 1 wurde mit der Abwandlung aufgeschlossen, daß die Reifedauer nicht 2, sondern 22 Stunden betrug. Die Ausbeute an herausgelöstem $TiO_2$ lag bei 95,7 %, bezogen auf den $TiO_2$-Gehalt des eingesetzten Aufschlußrückstandes. Die Menge an unlöslichem Rückstand lag bei 35 g und der Rückstand wies einen $TiO_2$-Gehalt von 4 %, bezogen auf den $TiO_2$-Gehalt des eingesetzten Aufschlußrückstands auf.

Beispiel 3

In einem Mischer wurde ein homogenes Gemisch, bestehend aus 62 kg $TiO_2$-Aufschlußrückstand mit einem Feststoffgehalt von 70 Gew.-%, mit einem $TiO_2$-Gehalt von 50 Gew.-% sowie einem Fe-Gehalt von 3,3 Gew.-%, bezogen auf den Feststoffgehalt und 52 kg Spaltabbrand mit einem Fe-Gehalt von 44 Gew.-% und einem Wassergehalt von 24 Gew.-% hergestellt. Zu dem Gemisch wurden 10 kg Kohle hinzugegeben und das Gemisch weitere 2 Minuten homogenisiert. Anschließend wurde das homogene Gemisch in einem Drehrohrofen bei 1000°C mit einer Verweilzeit von 2 Stunden thermisch behandelt. Das hergestellte Produkt wurde in einer Kugelmühle auf eine Feinheit von 95 % <45 μm gemahlen und anschließend gemäß Beispiel 1 aufgeschlossen. Die Ausbeute an herausgelöstem $TiO_2$ lag bei 84,2 %, bezogen auf den $TiO_2$-Gehalt des eingesetzten Aufschlußrückstandes. Die Menge an unlöslichem Rückstand lag bei 42,7 kg und der Rückstand wies einen $TiO_2$-Gehalt von 11,8 %, bezogen auf den eingesetzten Aufschlußrückstand, auf.

Vergleichsbeispiel 1

72,6 kg $TiO_2$-Aufschlußrückstand mit einem Feststoffgehalt von 70 Gew.-%, einem $TiO_2$-Gehalt von 50 Gew.-% und einem Fe-Gehalt von 3,3 Gew.-%, bezogen auf den Feststoffgehalt, wurden mit 9 kg Kohle in einem Mischer homogenisiert. Das Gemisch wurde anschließend auf einer Sinterpfanne gemäß Beispiel 1 gesintert. Das Sinterprodukt wurde in einer Kugelmühle gemahlen. Das erhaltene Produkt wurde dann gemäß Beispiel 1 aufgeschlossen, wobei die Reifezeit, gemäß Beispiel 2, 22 Stunden betrug. Die Ausbeute an herausgelöstem $TiO_2$ lag bei 72 %, bezogen auf den $TiO_2$-Gehalt des eingesetzten Aufschlußrückstandes. Der $TiO_2$-Gehalt im unlöslichen Rückstand lag bei 20 %, bezogen auf den $TiO_2$-Gehalt des eingesetzten Aufschlußrückstandes. Die Menge des zurückgebliebenen unlöslichen Rückstands lag bei 60,6 g.

Die Figuren 1 bis 5 zeigen Röntgenbeugungsdiagramme. Die Röntgenbeugungsdiagramme wurden mit dem Difraktometer D 500 der Fa. Siemens mit Probendrehung gemessen. Die Röhrenleistung betrug 30 mA/40 KV. Die Wellenlängen betrugen $CuK\alpha_I$:1.54060 A; $CuK\alpha_{II}$:1.54443 A. Die Schrittweite betrug 0,02°/sec.

Figur 1

Figur 1 zeigt ein Röntgenbeugungsdiagramm eines gewonnenen Ilmenits. Das Röntgenbeugungsdiagramm zeigt Peaks, die Ilmenit $FeTiO_3$ (I) und Hämatit $Fe_2O_3$ (H) zugeordnet werden können.

Figur 2

Figur 2 zeigt ein Röntgenbeugungsdiagramm eines unbehandelten Aufschlußrückstandes aus der $TiO_2$-Herstellung. Die Peaks können Rutil $TiO_2$ (R), Anatas $TiO_2$ (A), Armalkolit $FeMgTi_4O_{10}$ (Arm) und Magnesiumtitanoxid $MgTi_2O_5$ (MTO) zugeordnet werden.

Figur 3

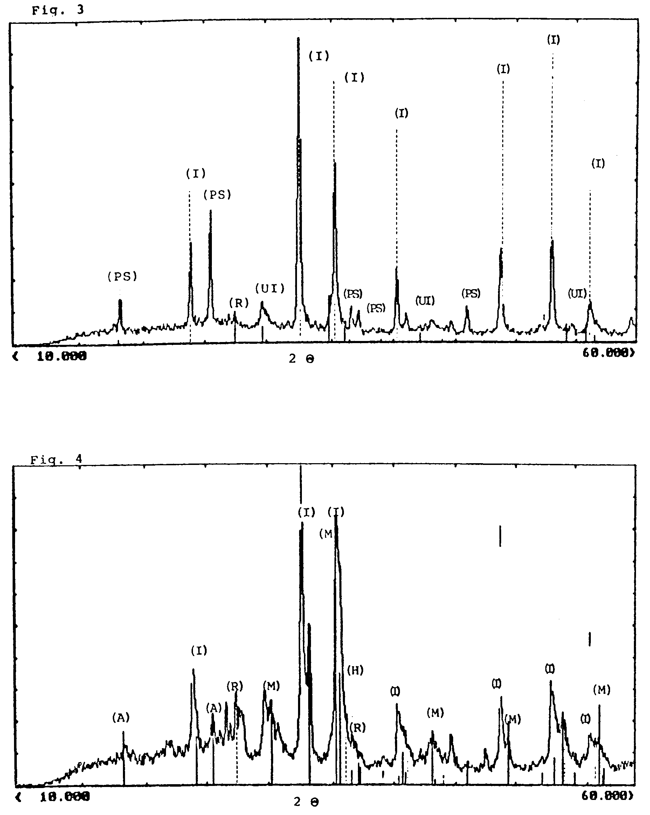

Figur 3 zeigt ein Röntgenbeugungsdiagramm des thermisch behandelten Aufschlußrückstandes gemäß Beispiel 1. Die Peaks können Ilmenit $FeTiO_3$ (I), Pseudobrookit $Fe_2TiO_5$ (Ps), Ulvospinnel $Fe_2TiO_4$ (Ul) und Rutil $TiO_2$ (R) zugeordnet werden. Durch Vergleich der getrennt gemessenen Röntgenbeugungsdiagramme von Ilmenit, Pseudobrookit, Ulvospinnel und Rutil mit dem Röntgenbeugungsdiagramm der Figur 3 konnte festgestellt werden, daß das Gemisch die Ilmenitstruktur zu mehr als 80 % aufweist. Ein Aufschlußrückstand, der gemäß Figur 2 Peaks für Rutil, Anatas, Armalkolit und Magnesiumtitanoxid aufweist, wird nach der thermischen Behandlung, in diesem Fall nach dem Sintervorgang, zu einem Feststoff umgesetzt, der die Ilmenitstruktur zu mehr als 80 % gemäß Figur 3 aufweist.

Figur 4

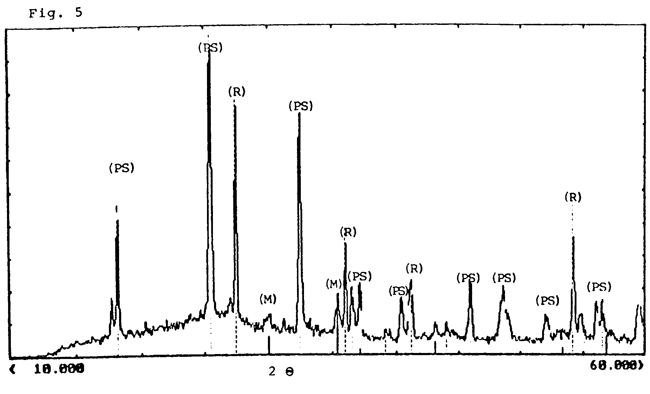

Figur 4 zeigt ein Röntgenbeugungsdiagramm eines im Drehrohrofen thermisch behandelten Aufschlußrückstandes gemäß Beispiel 3. Die Peaks können Rutil $TiO_2$ (R), Anatas $TiO_2$ (A), Magnetit $Fe_3O_4$ (M), Hämatit $Fe_2O_3$ (H), Ilmenit $FeTiO_3$ (I) und Pseubrookit $Fe_2TiO_5$ (PS) zugeordnet werden.

Figur 5

Figur 5 zeigt ein Röntgenbeugungsdiagramm des Sinterprodukts gemäß Vergleichsbeispiel 1. Die Peaks können Rutil $TiO_2$ (R), Pseudobrookit $Fe_2TiO_5$ (PS) und Magnetit $Fe_3O_4$ (M) zugeordnet werden. Die Ilmenitstruktur kann im Röntgenbeugungsdiagramm gemäß Figur 5 nicht beobachtet werden.

Tabelle: Röntgenbeugungsdaten

Die Tabelle weist die Röntgenbeugungswinkel und die zu den entsprechenden Beugungswinkeln zugehörigen Intensitäten aus. Die Winkel werden mit 2 Θ und die Intensität mit I angegeben.

Spalte I:     Rutil $TiO_2$

Spalte II:    Anastas $TiO_2$

Spalte III:   Eisentitanoxid $FeTiO_3$

Spalte IV:    Hämatit $Fe_2O_3$

Spalte V:     Magnetit $Fe_3O_4$

Spalte VI:    Ulvospinnel $Fe_2TiO_4$

Spalte VII:   Pseudobrookit $Fe_2TiO_5$

Spalte VIII:  Eisenmagnesiumtitanoxid $FeMgTi_4O_{10}$

Spalte IX:    Magnesiumtitanoxid $MgTi_2O_5$

Tabelle: Röntgenbeugungsdaten

| I | | II | | III | | IV | |
|---|---|---|---|---|---|---|---|
| $TiO_2$ | | $TiO_2$ | | $FeTiO_3$ | | $Fe_2O_3$ | |
| $2\theta$ | I | $2\theta$ | I | $2\theta$ | I | $2\theta$ | I |
| 27.435 | 100 | 25.288 | 100 | 23.832 | 50 | 24.141 | 30 |
| 36.085 | 50 | 36.947 | 10 | 32.656 | 100 | 33.150 | 100 |
| 39.181 | 8 | 37.789 | 20 | 35.315 | 85 | 35.609 | 70 |
| 41.223 | 25 | 38.564 | 10 | 40.418 | 70 | 39.272 | 3 |
| 44.045 | 10 | 48.049 | 35 | 48.924 | 85 | 40.855 | 20 |
| 54.310 | 60 | 53.899 | 20 | 53.199 | 100 | 43.511 | 3 |
| 56.647 | 20 | 55.062 | 20 | 56.403 | 50 | 49.469 | 40 |
| 62.735 | 10 | 62.105 | 4 | 61.803 | 85 | 54.092 | 45 |
| 64.026 | 10 | 62.684 | 14 | 63.190 | 85 | 56.158 | 1 |
| 65.481 | 2 | 68.765 | 6 | 70.181 | 70 | 57.432 | 5 |
| 69.000 | 20 | 70.313 | 6 | 74.668 | 60 | 57.580 | 10 |
| 69.787 | 12 | 74.019 | 2 | 79.855 | 30 | 62.457 | 30 |
| 72.409 | 2 | 75.021 | 10 | 81.495 | 60 | 63.976 | 30 |
| 76.495 | 4 | 76.002 | 4 | 84.109 | 70 | 69.603 | 3 |
| 79.827 | 2 | 80.729 | 2 | 86.897 | 70 | 71.929 | 10 |
| 82.322 | 6 | 82.122 | 2 | 92.085 | 70 | 72.249 | 6 |
| 84.254 | 4 | 82.666 | 6 | 100.754 | 30 | 75.429 | 8 |
| 87.462 | 2 | 83.155 | 4 | 103.915 | 50 | 77.735 | 4 |
| 89.538 | 8 | 93.209 | 2 | 105.148 | 70 | 78.763 | 2 |
| 90.697 | 4 | 94.186 | 4 | 106.722 | 70 | 80.700 | 5 |
| 95.267 | 6 | 95.139 | 4 | 113.495 | 85 | 82.924 | 5 |
| 96.005 | 6 | 98.318 | 2 | 115.043 | 70 | 84.924 | 7 |
| 97.171 | 4 | 99.812 | 2 | | | 88.541 | 7 |
| 105.077 | 2 | 101.228 | 2 | | | 91.343 | 2 |
| 106.003 | 2 | 107.447 | 4 | | | 93.712 | 7 |
| 109.400 | 2 | 108.954 | 4 | | | 95.235 | 1 |
| 116.217 | 4 | 112.830 | 2 | | | 95.652 | 3 |
| 117.534 | 4 | 113.849 | 2 | | | 102.287 | 4 |
| 120.031 | 8 | 114.883 | 2 | | | 104.900 | 1 |
| 122.761 | 8 | 118.412 | 4 | | | 106.614 | 5 |
| 123.667 | 8 | 120.074 | 2 | | | 107.011 | 4 |
| 131.842 | 6 | 121.735 | 2 | | | 108.069 | 5 |
| 136.550 | 8 | 122.313 | 2 | | | 111.516 | 2 |
| 140.062 | 12 | 131.004 | 2 | | | 113.573 | 2 |
| 143.074 | 2 | 135.971 | 2 | | | 116.054 | 5 |
| 155.844 | 2 | 137.372 | 4 | | | 117.742 | 1 |
| | | 143.899 | 2 | | | 118.665 | 3 |
| | | 150.040 | 4 | | | 122.402 | 6 |
| | | 152.561 | 2 | | | 125.899 | 1 |
| | | | | | | 128.766 | 3 |
| | | | | | | 131.842 | 5 |
| | | | | | | 133.235 | 3 |
| | | | | | | 144.459 | 4 |
| | | | | | | 147.944 | 4 |

Tabelle: Röntgenbeugungsdaten

| V | | VI | | VII | | VIII | |
|---|---|---|---|---|---|---|---|
| Fe$_3$O$_4$ | | Fe$_2$TiO$_4$ | | Fe$_2$TiO$_5$ | | FeMgTi$_4$O$_{10}$ | |
| 2 Θ | I | 2 Θ | I | 2 Θ | I | 2 Θ | I |
| 18.265 | 8 | 18.003 | 8 | 18.090 | 45 | 17.654 | 40 |
| 30.104 | 30 | 29.569 | 33 | 25.553 | 100 | 18.155 | 80 |
| 35.428 | 100 | 31.840 | 100 | 32.566 | 80 | 25.487 | 100 |
| 37.061 | 8 | 36.425 | 6 | 36.584 | 20 | 32.387 | 80 |
| 43.047 | 20 | 42.307 | 19 | 37.402 | 25 | 36.606 | 10 |
| 53.392 | 10 | 52.477 | 10 | 40.579 | 11 | 36.833 | 6 |
| 56.941 | 30 | 55.939 | 33 | 41.039 | 15 | 37.197 | 10 |
| 62.508 | 40 | 61.402 | 39 | 46.005 | 25 | 41.108 | 4 |
| 65.737 | 2 | 64.535 | 1 | 48.876 | 30 | 45.981 | 18 |
| 70.920 | 4 | 69.603 | 3 | 52.429 | 15 | 48.995 | 8 |
| 73.938 | 10 | 72.569 | 7 | 55.184 | 15 | 52.069 | 8 |
| 74.967 | 4 | 73.534 | 3 | 56.329 | 20 | 54.746 | 10 |
| 78.931 | 2 | 77.404 | 2 | 60.028 | 35 | 56.256 | 30 |
| 86.689 | 4 | 80.249 | 1 | 62.256 | 11 | 56.598 | 14 |
| 89.599 | 12 | 84.953 | 3 | 65.712 | 15 | 59.631 | 18 |
| 94.407 | 6 | 87.761 | 8 | 68.426 | 9 | 60.153 | 8 |
| 102.218 | 2 | 92.427 | 2 | 72.035 | 5 | | |
| 105.219 | 6 | 99.946 | 1 | 72.676 | 5 | | |
| 106.182 | 4 | 102.803 | 5 | 75.157 | 7 | | |
| 110.263 | 4 | 103.741 | 2 | 76.798 | 5 | | |
| 118.750 | 2 | 107.630 | 2 | | | | |
| 122.090 | 6 | 110.603 | 1 | | | | |
| 128.023 | 8 | 115.688 | 1 | | | | |
| 138.635 | 4 | 118.835 | 4 | | | | |
| 143.210 | 6 | 124.310 | 10 | | | | |
| 144.814 | 4 | 127.778 | 1 | | | | |
| | | 133.946 | 2 | | | | |
| | | 137.969 | 4 | | | | |
| | | 139.435 | 2 | | | | |
| | | 150.800 | 1 | | | | |

| IX MgTi$_2$O$_5$ | | | |
|---|---|---|---|
| 2θ | I | 2θ | I |
| 17.763 | 20 | | |
| 18.177 | 32 | 68.192 | 3 |
| 20.254 | 4 | 68.504 | 4 |
| 25.442 | 100 | 69.183 | 13 |
| 26.991 | 5 | 71.397 | 5 |
| 31.199 | 9 | 71.689 | 10 |
| 32.566 | 80 | 72.195 | 3 |
| 35.971 | 1 | 72.329 | 3 |
| 36.561 | 20 | 73.024 | 6 |
| 36.833 | 9 | 75.130 | 9 |
| 37.265 | 18 | 75.347 | 5 |
| 37.697 | 2 | 76.276 | 2 |
| 37.948 | 2 | 76.523 | 8 |
| 40.579 | 21 | 77.321 | 2 |
| 41.200 | 22 | 77.514 | 2 |
| 44.580 | 2 | 77.708 | 2 |
| 45.911 | 12 | 78.401 | 3 |
| 46.122 | 31 | 78.652 | 3 |
| 48.545 | 38 | 79.434 | 4 |
| 49.303 | 18 | 81.182 | 2 |
| 52.069 | 4 | 82.666 | 3 |
| 52.237 | 20 | 83.068 | 3 |
| 52.765 | 3 | 83.328 | 2 |
| 52.886 | 3 | 83.472 | 2 |
| 53.126 | 1 | 83.935 | 3 |
| 53.729 | 4 | 87.641 | 3 |
| 55.159 | 16 | 87.820 | 2 |
| 55.646 | 3 | 88.842 | 3 |
| 56.232 | 18 | | |
| 56.574 | 3 | | |
| 57.383 | 6 | | |
| 58.590 | 5 | | |
| 59.680 | 37 | | |
| 59.829 | 20 | | |
| 60.252 | 25 | | |
| 61.678 | 8 | | |
| 61.854 | 3 | | |
| 62.483 | 3 | | |
| 63.696 | 5 | | |
| 65.071 | 7 | | |
| 65.481 | 11 | | |
| 68.010 | 7 | | |

**Patentansprüche**

1.  Verfahren zur Gewinnung von TiO$_2$ aus dem Rückstand der TiO$_2$-Herstellung, bei der Ilmenit und/oder Schlacke mit Schwefelsäure aufgeschlossen wird und ein Rückstand mit TiO$_2$-Gehalten von 20 bis 60 %, bezogen auf den

TiO$_2$-Feststoffgehalt zurückbleibt, dadurch gekennzeichnet, daß

  a) der Rückstand mit einem oder mehreren Bestandteilen, ausgewählt aus Eisen, Eisenoxid, eisen- oder eisenoxidhaltigen Rückständen gemischt wird;

  b) das Gemisch thermisch behandelt wird;

  c) das thermisch behandelte Produkt mit Schwefelsäure in einem Gewichtsverhältnis von TiO$_2$ zu H$_2$SO$_4$ von 1 : 1 bis 1 : 6 gemischt wird;

  d) das Gemisch auf eine Temperatur von 130° bis 280°C erwärmt wird,

  e) das Gemisch 15 Min. bis 22 Stunden bei einer Temperatur von 130° bis 280°C gehalten wird;

  f) der daraus erhaltene Aufschlußkuchen aufgearbeitet und der Hydrolyse zugeführt wird.

2. Verfahren nach Anspruch 1, dadurch gekennzeichnet, daß der Rückstand mit einem oder mehreren Bestandteilen, ausgewählt aus Eisen, Eisenoxid, eisen- oder eisenoxidhaltigen Rückständen und mindestens einem Bestandteil, ausgewählt aus Kohle und kohlehaltigen Rückständen gemäß Verfahrensstufe (a) gemischt wird.

3. Verfahren nach den Ansprüchen 1 oder 2, dadurch gekennzeichnet, daß das Gemisch in Abwandlung der Verfahrensstufe (b) gesintert wird und das Sintergut anschließend gemahlen wird.

4. Verfahren nach den Ansprüchen 1 bis 3, dadurch gekennzeichnet, daß in der Verfahrensstufe (c) das Produkt mit Schwefelsäure in einem Gewichtsverhältnis von TiO$_2$ zu H$_2$SO$_4$ von 1 : 1 bis 1 : 5 gemischt wird.

5. Verfahren nach den Ansprüchen 1 bis 3, dadurch gekennzeichnet, daß in der Verfahrensstufe (c) das Produkt mit Schwefelsäure in einem Gewichtsverhältnis von TiO$_2$ zu H$_2$SO$_4$ von 1 : 0,5 bis 1 : 2,5 gemischt wird und dem Gemisch anschließend Oleum in einem Gewichtsverhältnis von TiO$_2$ zu H$_2$SO$_4$ von 1 : 0,5 bis 1 : 3,5 zugesetzt wird.

6. Verfahren nach den Ansprüchen 1 bis 5, dadurch gekennzeichnet, daß in der Verfahrensstufe (d) das Gemisch auf eine Temperatur von 130° bis 280°C erwärmt und in der Verfahrensstufe (e) das Gemisch 15 Min. bis 6 Stunden bei einer Temperatur von 130° bis 280°C gehalten wird.

7. Verfahren nach den Ansprüchen 1 bis 6, dadurch gekennzeichnet, daß in der Verfahrensstufe (d) das Gemisch auf eine Temperatur von 130° bis 230°C erwärmt und in der Verfahrensstufe (e) das Gemisch 15 Min. bis 6 Stunden bei einer Temperatur von 130° bis 230°C gehalten wird.

8. Verfahren nach einem der Ansprüche 1 bis 7, dadurch gekennzeichnet, daß das Gemisch zur thermischen Behandlung gemäß der Verfahrensstufe (b) in einen Drehrohrofen, eine stationäre oder zirkulierende Wirbelschicht oder eine Sintervorrichtung eingebracht wird.

Claims

1. A method for recovering TiO$_2$ from the residue from TiO$_2$ production, in which ilmenite and/or slag is decomposed with sulphuric acid and a residue with TiO$_2$ contents of 20 to 60%, relative to the TiO$_2$ solids content, remains, characterised in that

  a) the residue is mixed with one or more constituents, selected from iron, iron oxide, iron-containing or iron oxide-containing residues;

  b) the mixture is heat-treated;

  c) the heat-treated product is mixed with sulphuric acid in a weight ratio of TiO$_2$ to H$_2$SO$_4$ of 1 : 1 to 1 : 6;

  d) the mixture is heated to a temperature of 130° to 280°C;

  e) the mixture is kept for 15 minutes to 22 hours at a temperature of 130° to 280°C;

f) the decomposition cake obtained therefrom is worked up and is sent for hydrolysis.

2.  A method according to Claim 1, characterised in that the residue is mixed with one or more constituents, selected from iron, iron oxide, iron-containing or iron oxide-containing residues, and at least one constituent, selected from carbon and carbon-containing residues in accordance with method step (a).

3.  A method according to Claims 1 or 2, characterized in that the mixture is sintered in a modification of method step (b) and the sinter product is then ground.

4.  A method according to Claims 1 to 3, characterised in that in method step (c) the product is mixed with sulphuric acid in a weight ratio of $TiO_2$ to $H_2SO_4$ of 1 : 1 to 1 : 5.

5.  A method according to Claims 1 to 3, characterised in that in method step (c) the product is mixed with sulphuric acid in a weight ratio of $TiO_2$ to $H_2SO_4$ of 1 : 0.5 to 1 : 2.5 and then oleum is added to the mixture in a weight ratio of $TiO_2$ to $H_2SO_4$ of 1 : 0.5 to 1 : 3.5.

6.  A method according to Claims 1 to 5, characterised in that in method step (d) the mixture is heated to a temperature of 130° to 280°C and in method step (e) the mixture is kept for 15 minutes to 6 hours at a temperature of 130° to 280°C.

7.  A method according to Claims 1 to 6, characterised in that in method step (d) the mixture is heated to a temperature of 130° to 230°C and in method step (e) the mixture is kept for 15 minutes to 6 hours at a temperature of 130° to 230°C.

8.  A method according to one of Claims 1 to 7, characterised in that the mixture, for heat treatment in accordance with method step (b), is introduced into a rotary kiln, a stationary or circulating fluidised bed or a sintering apparatus.

**Revendications**

1.  Procédé d'obtention de $TiO_2$ à partir du résidu de la fabrication de $TiO_2$, qui consiste à attaquer de l'ilménite et/ou des scories par de l'acide sulfurique et à recueillir un résidu ayant une teneur en $TiO_2$ de 20 à 60% rapportée à la teneur en matière solide de $TiO_2$, caractérisé en ce qu'il consiste

    a) à mélanger le résidu à un constituant ou à plusieurs constituants, choisi parmi les fers, l'oxyde de fer, les résidus ferreux ou contenant de l'oxyde de fer;
    b) à traiter le mélange thermiquement;
    c) à mélanger le produit traité thermiquement à de l'acide sulfurique en un rapport pondéral de $TiO_2$ à $H_2SO_4$ de 1: 1 à 1: 6;
    d) à porter le mélange à une température de 130 à 280°C,
    e) à maintenir le mélange pendant 15 minutes à 22 heures à une température de 130° à 280°C;
    f) à traiter le gâteau d'attaque ainsi obtenu et à l'envoyer à l'hydrolyse.

2.  Procédé suivant la revendication 1, caractérisé en ce qu'il consiste à mélanger le résidu à un constituant ou à plusieurs constituants choisi parmi les fers, l'oxyde de fer, les résidus ferreux ou contenant de l'oxyde de fer et au moins à un constituant choisi parmi le charbon et les résidus contenant du charbon suivant le stade (a) du procédé.

3.  Procédé suivant la revendication 1 ou 2, caractérisé en ce qu'il consiste à fritter le mélange en variante du stade (b) du procédé et à broyer ensuite le produit fritté.

4.  Procédé suivant l'une des revendications 1 à 3, caractérisé en ce qu'il consiste au stade (c) du procédé à mélanger le produit à l'acide sulfurique en un rapport pondéral de $TiO_2$ à $H_2SO_4$ de 1 : 1 à 1:5.

5.  Procédé suivant l'une des revendications 1 à 3, caractérisé en ce qu'il consiste au stade (c) du procédé à mélanger le produit à de l'acide sulfurique en un rapport pondéral de $TiO_2$ à $H_2SO_4$ de 1 : 0,5 à 1 : 2,5 et à ajouter ensuite au mélange de l'oléum en un rapport pondéral de $TiO_2$ à $H_2SO_4$ de 1: 0,5 à 1: 3,5.

6.  Procédé suivant l'une des revendications 1 à 5, caractérisé en ce qu'il consiste au stade (d) du procédé à porter le mélange à une température de 130° à 280°C et au stade (e) du procédé à maintenir le mélange pendant 15 minutes à 6 heures à une température de 130° à 280°C.

**7.** Procédé suivant l'une des revendications 1 à 6, caractérisé en ce qu'il consiste au stade (d) du procédé à porter le mélange à une température de 130° à 230°C et au stade (e) du procédé à maintenir le mélange pendant 15 minutes à 6 heures à une température de 130° à 230°C.

**8.** Procédé suivant l'une des revendications 1 à 7, caractérisé en ce qu'il consiste à introduire le mélange pour le traitement thermique suivant le stade (b) du procédé dans un four tubulaire rotatif, dans un lit fluidisé fixe ou circulant ou dans un dispositif de frittage.

Fig. 1

Fig. 2

Fig. 3

Fig. 4

Fig. 5